# EUROPEAN PATENT APPLICATION

(11) **EP 4 465 605 A1**
(43) Date of publication of application: **20.11.2024**
(21) Application number: 24175803.6
(22) Date of filing: 14.05.2024
(51) Int. Cl.: H04L 41/0823, H04L 41/16, H04W 24/02, H04L 43/08, H04L 41/12, H04W 88/08, H04L 12/28

(54) **ACCESS DEVICE, COMPUTING DEVICE, METHOD, APPARATUS, AND COMPUTER-READABLE MEDIUM**

(30) Priority: 15.05.2023 CN 202310546168
(71) Applicant: Nokia Solutions and Networks Oy, 02610 Espoo (FI)
(72) Inventor: YAO, Yi Feng, Shanghai, 200023 (CN); ZHU, Jian Hua, Shanghai, 200000 (CN); ZHANG, Xi Li, Shanghai (CN)
(74) Representative: DREISS Patentanwälte PartG mbB

(57) **Abstract**

Examples of the disclosure relate to an access device, a computing device, a related method, an apparatus, and a medium. In an aspect, the access device transmits traffic statistics data related to traffic passing through the access device to the computing device based on at least one statistics data model for statistics data; receives traffic configuration information for the traffic from the computing device based on at least one configuration data model for traffic configuration, wherein the traffic configuration information is determined by utilizing an artificial intelligence (AI)/machine learning (ML) model to process the traffic statistics data; and configures the traffic based on the traffic configuration information. The examples of the disclosure extend the statistics data model/configuration data model, and can optimize traffic classification, bandwidth allocation, quality of service (QoS) control, etc. based on the AI/ML model.

## Description

### FIELD

Examples of the disclosure generally relate to the field of communications, and more particularly relate to an access device, a computing device, a method, an apparatus, and a computer-readable medium.

### BACKGROUND

There are high hopes for machine learning (ML) as a key enabler of future radio communication networks. By utilizing the large volumes of data generated by communication networks, the machine learning is expected to tackle increasingly complex network problems. However, current communication network systems are not positioned to support subsequent needs of machine learning-based applications, especially in terms of enabling the procedures associated with data collection, processing, and output distribution.

The focus group on machine learning for future networks including 5G, belonging to the international telecommunication union telecommunication standardization sector (ITU-T) has published a specification for a unified architecture for 5G and beyond. The standardized architecture of the specification provides a common nomenclature for machine-learning related mechanisms, thus enabling interoperability with other networked systems. Besides the recommendations of the ITU-T, other important standardization organizations, such as the third generation partnership project (3GPP) or the European telecommunications standards institute (ETSI), are currently working on the integration of data analytics with network functions.

### SUMMARY

In general, illustrative examples of the disclosure relate to a technical solution for network configuration based on an extended framework communication protocol.

In a first aspect of the disclosure, there is provided an access device. The access device comprises at least one processor and at least one memory. The at least one memory stores an instruction. When executed by the at least one processor, the instruction causes the access device to at least: transmit traffic statistics data related to traffic passing through the access device to the computing device based on at least one statistics data model for statistics data; receive traffic configuration information for the traffic from the computing device based on at least one configuration data model for traffic configuration, wherein the traffic configuration information is determined by utilizing an artificial intelligence (AI)/machine learning (ML) model to process the traffic statistics data; and configure the traffic based on the traffic configuration information.

In a second aspect of the disclosure, there is provided a computing device. The computing device comprises at least one processor and at least one memory. The at least one memory stores an instruction. When executed by the at least one processor, the instruction causes the computing device to at least: receive traffic statistics data related to traffic passing through an access device from the access device based on at least one statistics data model for statistics data; utilize an artificial intelligence (AI)/machine learning (ML) model to process the traffic statistics data to determine traffic configuration information for the traffic; and transmit the traffic configuration information to the access device based on at least one configuration data model for traffic configuration.

In a third aspect of the disclosure, there is provided a method. The method comprises: transmitting, at an access device, traffic statistics data related to traffic passing through the access device to a computing device based on at least one statistics data model for statistics data; receiving traffic configuration information for the traffic from the computing device based on at least one configuration data model for traffic configuration, wherein the traffic configuration information is determined by utilizing an artificial intelligence (AI)/machine learning (ML) model to process the traffic statistics data; and configuring the traffic based on the traffic configuration information.

In a fourth aspect of the disclosure, there is provided a method. The method includes: receiving, at a computing device, traffic statistics data related to traffic passing through an access device from the access device based on at least one statistics data model for statistics data; utilizing an artificial intelligence (AI)/machine learning (ML) model to process the traffic statistics data to determine traffic configuration information for the traffic; and transmitting the traffic configuration information to the access device based on at least one configuration data model for traffic configuration.

In a fifth aspect of the disclosure, there is provided an apparatus. The apparatus comprises: means for transmitting traffic statistics data related to traffic passing through the access device to a computing device based on at least one statistics data model for statistics data at an access device; means for receiving traffic configuration information for the traffic from the computing device based on at least one configuration data model for traffic configuration, wherein the traffic configuration information is determined by utilizing an artificial intelligence (AI)/machine learning (ML) model to process the traffic statistics data; and means for configuring the traffic based on the traffic configuration information.

In a sixth aspect of the disclosure, there is provided an apparatus. The apparatus comprises: means for receiving traffic statistics data related to traffic passing through an access device from the access device based on at least one statistics data model for statistics data at a computing device; means for utilizing an artificial intelligence (AI)/machine learning (ML) model to process the traffic statistics data to determine traffic configuration information for the traffic; and means for transmitting the traffic configuration information to the access device based on at least one configuration data model for traffic configuration.

In a seventh aspect of the disclosure, there is provided a non-transitory computer-readable medium. The non-transitory computer-readable medium comprises a program instruction. The program instruction is configured to cause an apparatus to perform at least the method according to any one of the third to fourth aspects.

In an eighth aspect of the disclosure, there is provided a computer program. When executed by an apparatus, the computer program causes the apparatus to perform at least the method according to any one of the third to fourth aspects.

In a ninth aspect of the disclosure, there is provided an access device. The access device comprises: a transmission circuitry configured to transmit traffic statistics data related to traffic passing through the access device to a computing device based on at least one statistics data model for statistics data; a reception circuitry configured to receive traffic configuration information for the traffic from the computing device based on at least one configuration data model for traffic configuration, wherein the traffic configuration information is determined by utilizing an artificial intelligence (AI)/machine learning (ML) model to process the traffic statistics data; and a configuration circuitry configured to configure the traffic based on the traffic configuration information.

In a tenth aspect of the disclosure, there is provided a computing device. The computing device comprises: a reception circuitry configured to receive traffic statistics data related to traffic passing through an access device from the access device based on at least one statistics data model for statistics data; a utilization circuitry configured to utilize an artificial intelligence (AI)/machine learning (ML) model to process the traffic statistics data to determine traffic configuration information for the traffic; and a transmission circuitry configured to transmit the traffic configuration information to the access device based on at least one configuration data model for traffic configuration.

It should be understood that what is described in this section of summary is not intended to identify key or critical features of the examples of the disclosure nor is intended to limit the scope of the disclosure. Other features of the disclosure will become apparent from the following description.

### BRIEF DESCRIPTION OF THE DRAWINGS

In order to more clearly illustrate technical solutions in the examples of the present application, a brief introduction to the accompanying drawings required for the description of the examples will be provided below. Apparently, the accompanying drawings in the following description are merely some examples of the present application, and it is apparent to those of ordinary skill in the art that other drawings may be derive from these drawings without departing from the scope claimed in the present application.
FIG. 1A illustrates a block diagram of an example communication system in which examples of the disclosure may be implemented;
FIG. 1B illustrates an example of a specific network deployment in which examples of the disclosure may be implemented;
FIG. 1C illustrates an example of a communication protocol that examples of the disclosure may utilize as a protocol framework;
FIG. 2 illustrates a schematic flowchart of interaction between an access device and a computing device according to some examples of the disclosure;
FIG. 3 illustrates an interaction process of an access device with a computing device according to an example of the disclosure;
FIG. 4 illustrates a training process and a reasoning process of a learned machine learning model according to some examples of the disclosure;
FIG. 5 illustrates a schematic flowchart performed by an access device according to some examples of the disclosure;
FIG. 6 illustrates a schematic flowchart performed by a computing device according to some examples of the disclosure;
FIG. 7 illustrates a simplified block diagram of an electronic device suitable for implementing examples of the disclosure; and
FIG. 8 illustrates a schematic diagram of a computer-readable medium suitable for implementing examples of the disclosure.

The same or similar reference numerals refer to the same or similar elements throughout all the drawings.

### DETAILED DESCRIPTION OF EMBODIMENTS

Principles and spirit of the disclosure will be described with reference to several illustrative examples shown in the accompanying drawings. It should be understood that these specific examples are described only to enable those skilled in the art to better understand and thereby implement the disclosure, and are not intended to limit the scope of the disclosure in any way.

As used herein, the term "comprise" and similar terms should be understood as openended terms, that is, "comprise but not limited to". The term "based on" should be understood as "based at least in part on". The term "an example" or "the example" should be understood as "at least one example". The terms "first", "second", etc. may refer to different or the same object. Other explicit and implicit definitions may be included below.

As used herein, the term "determine" encompasses a wide variety of actions. For example, "determine" may include compute, calculate, process, derive, investigate, look up (for example, look up in a table, database, or another data structure), ascertain, etc. Furthermore, "determine" may include receive (for example, receive information), access (for example, access data in a memory), etc. Furthermore, "determine" may include parse, select, choose, establish, etc. As used herein, as for "at least one of the following: <a list of two or more elements>", "at least one of <a list of two or more elements>", and similar expressions, a list of two or more elements is joined by "and" or "or", which means at least any one of these elements, at least any two or more of these elements, or at least all of these elements.

As used herein, the term "circuitry" refer to one or more of the following: (a) hardware-only circuit implementation mode (such as an implementation mode in only analog and/or digital circuitry); (b) combination of a hardware circuits and software, such as (if applicable) (i) a combination of an analog and/or digital hardware circuit and software/firmware, and (ii) any portion of a hardware processor and software (including a digital signal processor, software, and a memory that work together to cause an apparatus such as a radio frequency device or other computing device to perform various functions); and (c) a hardware circuit and/or a processor, such as a microprocessor or a part of a microprocessor, where software (for example, firmware) is required for operation, but may be absent when the software is not required for operation.

Definition of a circuit applies to all scenes in which this term is used in the present application (including in any claims). As a further example, the term "circuitry" as used herein also covers an implementation mode of a hardware circuit or processor (or a plurality of processors) alone, or a part of a hardware circuit or processor, or accompanying software or firmware. For example, the term "circuitry" also covers , for example and if applicable to the particular claim element, a baseband integrated circuit, a processor integrated circuit or similar integrated circuits in other computing devices.

The technical report TR-069 is one technical specification proposed by Broadband Forum. The TR-069 is one communication agreement for remote control over a user terminal device based on a customer premise equipment (CPE) wide area network (WAN) management protocol (CWMP), and is one communication agreement between customer premise equipment (CPE) and an auto-configuration server (ACS). The customer premise equipment (CPE) may use the agreement to complete necessary actions for initialization and operation management, such as service opening, function setting, file upload and download, system detection, etc. The agreement provides support for auto-configuration and dynamic traffic configuration for user device, image management for user software or firmware, monitoring of user device status and performance, and diagnosis of communication failures.

The examples of the disclosure provide a technical solution for an improved framework protocol (for example, improved CWMP) to obtain data and utilize the data to optimize network configuration.

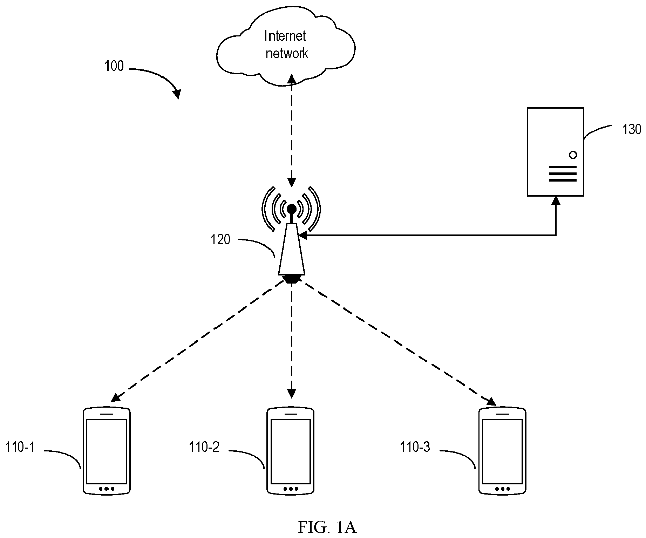

FIG. 1A illustrates a block diagram of an example communication system in which examples of the disclosure may be implemented. As shown in FIG. 1A, the communication system 100 includes at least one client device 110, for example, client devices 110-1, 110-2, 110-3, an access device 120, and a computing device 130. The at least one client device 110 accesses the Internet by the access device 120. The access device 120 may obtain data through at least one port within a local area network formed together with the at least one client device 110. The access device 120 may also communicates with the computing device 130. In some example, communication may include transmitting or receiving data and/or information. The access device 120 uploads the obtained data based on the improved framework protocol. The computing device 130 configures the local area network formed by the access device 120 and the at least one client device 110 based on the improved framework protocol. In some examples, the at least one client device 110 may be referred to as at least one piece of customer premise equipment (CPE). The access device 120 may be referred to as an access point (AP). The computing device 130 may be referred to as a cloud server. It should be noted that the number of the client devices, the access devices, and the computing devices in the example of the disclosure is not limited to the above examples.

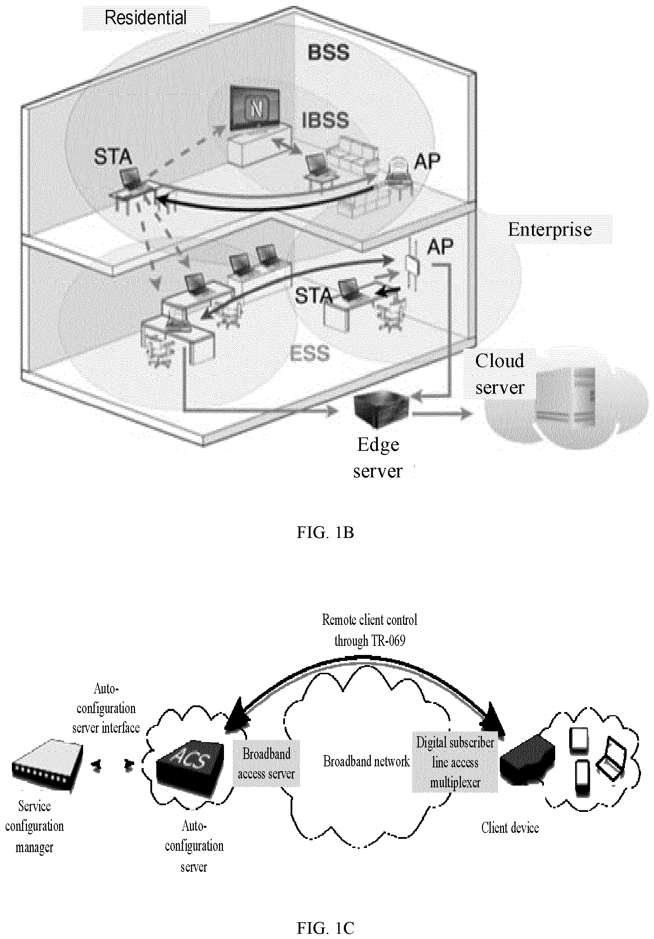

FIG. 1B illustrates an example of a specific network deployment in which examples of the disclosure may be implemented, including two types of network deployments. Example type one is a wireless local area network deployment in a residential scene. The wireless local area network deployment is achieved through a basic service set (BSS) and an independent basic service set (IBSS). The basic service set (BSS) is a wireless local area network in which one or more stations (STAs) communicate through one access point (AP). It can be understood as a small network composed of one access point AP and several stations (STAs) associated with the access point. The independent basic service set (IBSS) is a network composed of a plurality of stations (STAs). There is no access point AP for management and control, and each station (STA) communicates with each other to form a self-organized wireless network. Therefore, the independent basic service set (IBSS) is also known as an Ad Hoc network mode. In the local area network deployment for the residential scene, each wireless local area network is responsible for its own management and operation.

Example type two is a wireless local area network deployment in an enterprise scene. Wider wireless local area network coverage is achieved by an extended service set (ESS). The extended service set (ESS) is a large network composed of a plurality of basic service sets (BSSs), which are interconnected by a plurality of access points (APs) through wireless bridges to form a wireless local area network with a larger coverage area. In the extended service set (ESS), a station (STA) can seamlessly switch between different basic service sets (BSSs) by roaming, so as to achieve wider wireless coverage. Thus, the extended service set (ESS) is of a wireless network structure with a plurality of access points (APs). The local area network deployment in the enterprise scene can typically be found in an environment, such as university campuses, offices, stadiums, etc., controlled by a single network operator.

In the wireless local area network deployments in the enterprise scene and the residential scene, the access point (AP) may communicate with an edge server and/or a cloud server, thereby handing over part of computing content with high computing power and high storage requirements to the edge server and/or the cloud server, so as to cooperatively complete the deployment of various client devices in the wireless local area network.

FIG. 1C illustrates an example of a communication protocol that examples of the disclosure may utilize as a protocol framework. Particularly, a technical report TR369 user service platform (USP) protocol is an upgraded and extended version of a TR069 protocol. An auto-configuration server accesses a broadband network through a broadband access server. The client device accesses the broadband network through a digital subscriber line access multiplexer. The auto-configuration server remotely controls the client device by the TR069 communication protocol. The auto-configuration server also interacts with a service configuration manager through an interface of the auto-configuration server. In some examples of the disclosure, a CWMP/ USP management protocol may be used as a framework, and the statistics data model/configuration data model may be extended for bandwidth allocation, QoS control, and traffic scheduling, which is an architectural solution that uses artificial intelligence (AI)/machine learning (ML) as a part of future WiFi network traffic classification, bandwidth allocation, and QoS control.

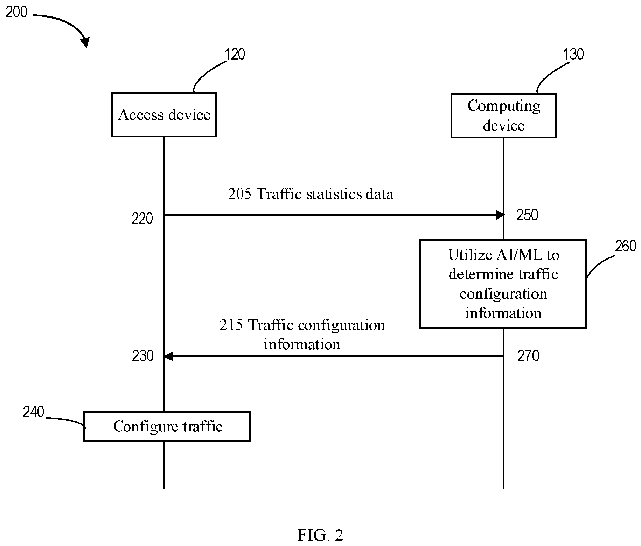

FIG. 2 illustrates a schematic flowchart of interaction between an access device and a computing device according to some examples of the disclosure. In some examples, with reference to FIG. 1A, for example, an access device 120 is an access device in a flow 200, and a computing device 130 is a computing device in the flow 200. In the example flow 200 of FIG. 2, firstly, the access device 120 transmits (220) traffic statistics data 205 related to traffic passing through the access device 120 to the computing device 130 based on at least one statistics data model for statistics data.

For example, the access device 120 may obtain the traffic statistics data 205 related to the traffic passing through the access device 120 through at least one port within a local area network formed by the access device together with at least one client device 110. As shown in FIG. 1A, the at least one client device 110 (such as a mobile phone, a computer, a television, etc.) accesses the Internet network through an access device 120 (for example, the at least one client device 110 accesses a "large network" of an operator through an optical modem 120). Optionally, the at least one client device 110 may be connected to the access device 120 by a first-level router or may be connected to the access device 120 by a multi-level router. The access device 120 obtains port data through at least one port within a local area network formed together with at least one client device 110. For example, in some examples, the access device 120 not only obtains traffic data of at least one port within the local area network formed by the access device 120 and the at least one client device 110, but also obtains information such as an IP address and an MAC address of each client device 110, an IP address of a communication side of the client device, and other information in the local area network from a "perspective" of the access device 120, and takes the same as the traffic statistics data.

With continued reference to FIG. 2, the access device 120 may extend the statistics data model, and transmit (220) the traffic statistics data related to the traffic passing through the access device 120 to the computing device 130 based on the extended framework protocol, for example, based on the CWMP/USP framework protocol as described above. Generally, the access device 120 has data processing and computing functions, but for computing content involving artificial intelligence (AI)/machine learning (ML) with high computing power and high storage requirements, the access device 120 cannot bear or will affect functions related to accessing the Internet network. Thus, in the example of the disclosure, the computing content related to artificial intelligence (AI)/machine learning (ML) is partially or entirely handed over to the computing device 130 for processing. Accordingly, the computing device 130 receives (250) the traffic statistics data 205 related to the traffic passing through the access device 120 from the access device 120 based on at least one statistics data model for statistics data. In some examples, the access device 120 transmits the traffic statistics data 205 to the computing device 130 at a preset period. Alternatively, the access device 120 transmits the traffic statistics data 205 to the computing device 130 in response to changes in traffic statistics information, traffic statistics data, etc. within the local area network.

Then, the access device 120 receives (230) traffic configuration information 215 for the traffic from the computing device 130 based on at least one configuration data model for traffic configuration. The traffic configuration information 215 is determined by utilizing an artificial intelligence (AI)/machine learning (ML) model to process the traffic statistics data 205. The access device 120 may extends the configuration data model, and receive (230), from the computing device 130, the traffic configuration information 215 for the traffic in the local area network formed together with the at least one client device 110 based on the extended framework protocol, for example, based on the CWMP/USP framework protocol as described above. Accordingly, the computing device 130 utilizes (260) the artificial intelligence (AI)/machine learning (ML) model to process the traffic statistics data 205 to determine the traffic configuration information 215 for the traffic. Moreover, the computing device 130 transmits (270) the traffic configuration information 215 to the access device 120 based on at least one configuration data model for traffic configuration. For example, in some examples, the computing device 130 inputs the traffic statistics data 205 into a learned machine learning model, obtains the inferred topology structure, traffic distribution, operating pattern, etc., of at least one client device 110 in the local area network, then determines the traffic configuration information 215 for the local area network from the "perspective" of the access device 120 according to other key information (for example, priority information of the at least one client device 110) in the traffic statistics data 205, and delivers the traffic configuration information 215 to the access device 120.

Then, the access device 120 configures (240) the traffic based on the traffic configuration information 215. The access device 120 configures the at least one client device 110 based on the traffic configuration information 215. After receiving the traffic configuration information 215 delivered by the computing device 130, the access device 120 uniformly deploys the local area network formed by the at least one client device 110 and the access device according to the traffic configuration information 215. In some examples, the traffic configuration information 215 includes operations of bandwidth allocation, bandwidth scheduling, quality of service (QoS) control, etc.

Through the above flow 200, the example of the disclosure provides a traffic configuration solution for a client devices in a local area network based on an extended communication protocol. Information such as a traffic topology structure in the local area network is obtained by obtaining traffic statistics data related to each client device from an access point perspective and performing inferring through a machine learning model, and then traffic configuration, such as bandwidth allocation and/or QoS control, is performed on each client device in the local area network according to the inferred information. In this way, the example of the disclosure can implement a higher-level and more specific bandwidth allocation and scheduling strategy, and is applicable to application scenes other than air interfaces.

In some examples of the disclosure, the access device 120 may control one or more of quality of service (QoS), bandwidth allocation, or traffic scheduling of the traffic based on the traffic configuration information 215. More specifically, the computing device 130 providing the traffic configuration information 215 determines the traffic configuration information 215 based on an inference results of the learned machine learning model (which may infer a network topology structure, traffic distribution, an operating pattern, etc., of the at least one client device 110 in the local area network). The traffic configuration information 215 includes bandwidth allocation of the at least one client device 110 in the local area network from the "perspective " of the access device 120, and/or traffic scheduling (that is, traffic scheduling) made to adjust the bandwidth allocation, and quality of service (QoS) control associated with the bandwidth allocation. The access device 120 configures the bandwidth allocation, adjusts the traffic scheduling, and makes the quality of service (QoS) control in the local area network according to the received traffic configuration information 215.

In some examples of the disclosure, the statistics data model, the configuration data model, or both of the statistics data model and the configuration data model may be applied to at least one or more of a medium access control (MAC) layer, an Internet protocol (IP) layer, or a transport layer. For example, the access device 120 can obtain and upload the MAC address of the at least one client device 110 and an MAC address of a corresponding communication side in the local area network based on the extended communication protocol, for example, a statistics model for obtaining MAC layer data extended in the communication protocol. For example, the access device 120 obtains data link layer data (second-layer data) through an Ethernet interface. The data includes the MAC address of the at least one client device 110 and the MAC address of the corresponding communication side in the local area network, and contains connection relation information of the at least one client device 110 in the local area network.

For another example, the access device 120 can further obtain and upload an IP address and a port number of the at least one client device 110 and an IP address and a port number of a corresponding communication side in the Internet network based on the extended communication protocol, for example, extending a statistics model for obtaining IP layer data in the communication protocol. For example, the access device 120 obtains network layer data (third-layer data) through an Ethernet interface. The network layer data includes the IP address (local area network IP) of the client device 110 and the IP address of the corresponding communication side in the Internet network, which implies a communication requirement of the at least one client device 110. A traffic requirement, an operating pattern (for example, a pattern such as watching videos, playing large-scale games, browsing web pages, and transmitting and receiving text messages), etc. of a corresponding client device 110 can be inferred through the IP address of the communication side.

Further, the access device 120 can obtain data link layer configuration information of the at least one client device 110 from the computing device 130 based on the extended communication protocol, for example, extending a configuration model for MAC layer data in the communication protocol. Similarly, the access device 120 can obtain network layer configuration information of the at least one client device 110 from the computing device 130 based on the extended communication protocol, for example, extending a configuration model for IP layer data in the communication protocol.

In some examples of the disclosure, the access device 120 may further transmit a request message to the computing device 130 to request that the computing device 130 to transmit the traffic configuration information 215 to the access device 120. As an example, the access device 120 may obtain and transmit the traffic statistics data 205 to the computing device 130 at the preset period. Alternatively, the access device 120 may obtain and transmit the traffic statistics data 205 to the computing device 130 in response to a change in traffic statistics data or a change in traffic statistics data of the at least one client device 110.

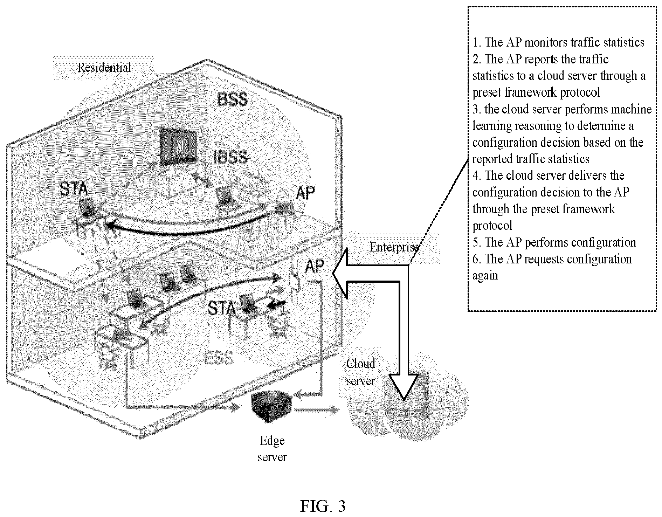

In some examples, as shown in FIG. 3, the access point (AP) monitors passing traffic and provides detailed/aggregated traffic statistics data. The access point (AP) reports the traffic statistics data to the cloud server by the CWMP/USP framework protocol. Based on the reported traffic statistics data, the cloud server uses the AI/ML technology to infer the network topology structure, the traffic distribution/allocation/working pattern, etc. The cloud server makes bandwidth allocation and QoS control decisions. The access point (AP) then receives the traffic configuration information delivered by the cloud server by the CWMP/USP framework protocol, and configures the at least one piece of customer premise equipment (CPE). If necessary, the access point (AP) may also send a request for bandwidth configuration to the cloud server again.

In some examples of the disclosure, the access device 120 may further perform a part of computation associated with utilizing the AI/MI, model to process the traffic statistics data, wherein the other part of the computation is performed by the computing device. As one possible example, computationally intensive artificial intelligence (AI)/machine learning (ML) functional steps should be assigned to the computing device 130 and performed, and limited functions may also be placed and performed on the access device 120 with limited computing resources.

In some examples of the disclosure, the statistics data model may include a first statistics data model for MAC layer connection information, a second statistics data model for IP layer connection information, or a combination of both. For example, the statistics data model is extended in the CWMP/USP framework protocol. The access device 120 uploads pseudo-codes of data link layer data and network layer data based on the extended statistics data model for traffic statistics as follows:
***Structure L2_Connection_Information {***
   ***Connection_Label;***
   ***Connection_SourceMACAddress;***
   ***Connection_VLANNumber;***
   ***Connection_DestinationMACAddress;***
   ***Connection_Prioriy;***
   ***Connection_SetUpTime;***
   ***Connection_SustainTime;***
   ***Connection_StatisticsTimeStamp; };***
***Structure L3_Connection_Information {***
   ***Connection_Label;***
   ***Connection_IPVersion;***
   ***Connection_TransportProtocol;***
   ***Connection_SourceIPAddress;***
   ***Connection_SourcePortNumber;***
   ***Connection_DestinationIPAddress;***
   ***Connection_DestinationPortNumber;***
   ***Connection_SetUpTime;***
   ***Connection_Sustain Time;***
   ***Connection_StatisticsTimeStamp;***

As can be seen from the pseudo-code section above, the extended communication protocol may include uploading MAC layer data through the first statistics data model and uploading IP layer data through the second statistics data model. The first statistics data model may include a source MAC address, a destination MAC address, an MAC layer priority information, an MAC layer label, a VLAN number, and information related to a response time of connection establishment, or other similar information of the client device.

As can also be seen from the pseudo-code portion above, the second statistics data model may include a source IP address, a destination IP address, a source port number, a destination port number, an IP version related to a transport protocol, a protocol version, and information related to a response time of connection establishment, or other similar information of the client device.

Those skilled in the art will readily understand that although the above example enumerates the first statistics data model and the second statistics data model that the statistics data model may include, and data counted by using these models, the disclosure is not limited thereto. In other examples of the disclosure, the statistics data model can also be configured to extend the CWMP/USP protocol, and can input other types of statistics information of the network topology structure inferred by the machine learning model.

The access device 120 obtains one or more pieces of information of priority information, a label, a virtual local area network (VLAN) number, and a response time of the at least one client device 110 through at least one port within the local area network formed by the access device and the at least one client device 110, and uploads the information to the computing device 130 as traffic statistics data required for AI/ML inference. The computing device 130 inputs the traffic statistics data including the above data into the learned machine learning model. The learned model is trained by using a training dataset of a same format during training. Alternatively, the computing device 130 uses one or more pieces of information of priority information, a label, a virtual local area network (VLAN) number, and a response time of the at least one client device 110 as adjustment information for determining a bandwidth allocation solution, for example, to provide higher bandwidth for a client device with higher priorities.

In some examples of the disclosure, the statistics data model may further include a third statistics data model of a statistics data list of MAC layer connection for the MAC layer connection information, a fourth statistics data model of a statistics data list of IP layer connection for the MAC layer connection information, or a combination of both.

For example, the third statistics data model and the fourth statistics data model are for the computing device 130 to "collect" at least one (set) of traffic statistics data 205. For example, the computing device 130 polls the various access devices 120 in the extended service set (ESS) and obtains multiple (sets) of traffic statistics data 205 based on the extended communication protocol including the third statistics data model and the fourth statistics data model in one communication with one of the access devices 120.

As a specific example, the third statistics data model and the fourth statistics data model are extended in the CWMP/USP framework protocol. The access device 120 may upload pseudo-codes of data link layer data and network layer data based on the extended statistics data model for traffic statistics as follows:
***Structure L2_Connection_Statistics list of L2_Connection_Information;***
***Structure L3_Connection_Statistics list of L2_Connection_Information;***

Those skilled in the art can easily understand that although the above example enumerates the third statistics data model and the fourth statistics data model that the statistics data model may include, and performs data statistics by using the models, the disclosure is not limited thereto. In other examples of the disclosure, the statistics data model can be configured to extend the CWMP/USP protocol and applied to other embodiments for obtaining traffic data statistics and performing network configuration.

In some examples of the disclosure, the configuration data model may include a first configuration data model for the MAC layer control information, a second configuration data model for the IP layer control information, or a combination of both.

For example, the configuration data model is extended in the CWMP/USP framework protocol. The access device 120 obtains codes of data link layer configuration and network layer configuration based on the extended configuration data model for traffic configuration as follows:
***Structure L2_QoS_Control_Information {***
   ***Connection_Label;***
   ***Connection_VLANNumber;***
   ***Connection_Prioriy; };***
***Structure L3_QoS_Control_Information {***
   ***Connection_Label;***
   ***Connection_VLANNumber;***
   ***Connection_Prioriy;***
   ***Connection_DSCP;***
***};***

As can be seen from the pseudo-code section above, the extended communication protocol may include obtaining MAC layer configuration information through the first configuration data model and obtaining IP layer configuration information through the second configuration data model. The first configuration data model includes configuring MAC layer labels, VLAN numbers, priorities. The second configuration data model includes configuring IP layer labels, VLAN numbers, priorities, and DSCP, or other similar information.

The access device 120 receives the traffic configuration information by the extended CWMP/USP protocol. The traffic configuration information may not be limited to the above types. Those skilled in the art can easily understand that the type and/or quantity of the traffic configuration information can be adjusted by adjusting output results of the machine learning model. All traffic configuration information obtained by using the configuration data model based on the extended CWMP/USP protocol falls within the scope of protection of the disclosure.

In some examples of the disclosure, the configuration data model may further include a third configuration data model of an MAC layer control list for the MAC layer control information, a fourth configuration data model of an IP layer control list for the MAC layer control information, or a combination of both.

For example, the third configuration data model and the fourth configuration data model are for the access device 120 to obtain at least one piece (set) of traffic configuration information 215. For example, the computing device 130 delivers a plurality of pieces (sets) of traffic configuration information 215 to the access device 120. The access device 120 obtains the plurality of pieces (sets) of traffic configuration information 215 based on extended communication protocols of the third configuration data model and the fourth configuration data model, and configures the client devices 110 in the local area network in sequence according to the plurality of pieces of traffic configuration information 215.

As an example, the third configuration data model and the fourth configuration data model are extended in the CWMP/USP framework protocol. The access device 120 obtains pseudo-codes of data link layer configuration and network layer configuration based on the extended configuration data model for traffic configuration as follows:
***Structure L2_QoS_Control list of L2_QoS_Control_Information;***
***Structure L3_QoS_Control list of L2_QoS_Control_Information;***

It should be noted that although the above example enumerates the third configuration data model and the fourth configuration data model that the configuration data model may include, the disclosure is not limited thereto. In other examples of the disclosure, those skilled in the art readily appreciate other embodiments that can be configured to extend the configuration data model of the CWMP/USP protocol and obtain traffic configuration information for local area network configuration.

In some examples of the disclosure, in a process of determining the traffic configuration information 215, the computing device 130 may utilize the AI/MI, model to determine one or more of network topology information, traffic distribution information, traffic allocation information, and traffic pattern information based on the traffic statistics data 205. Then, the computing device 130 may utilize the AI/ML model to determine the traffic configuration information 215 based on one or more of the network topology information, the traffic distribution information, the traffic allocation information, and the traffic pattern information.

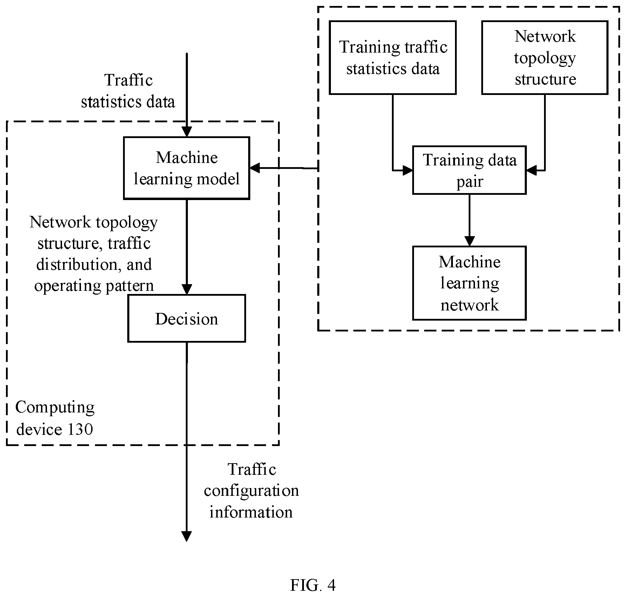

For example, as shown in FIG. 4, for a learned machine learning model employed by the computing device 130, a training data set used in a model construction of the machine learning model should correspond to the traffic statistics data 205, that is, using "training traffic statistics data". For example, the traffic statistics data includes one or more of an MAC address of at least one client device 110 and an MAC address of a corresponding communication side in the local area network, an IP address and a port number of the at least one client device 110 and an IP address and a port number of the corresponding communication side in the Internet network, priority information, a label, a VLAN number and a response time of the at least one client device 110. The training data set includes source MAC addresses, destination MAC addresses, source IP addresses, destination IP addresses, source port numbers, destination port numbers, priority information, labels, VLAN numbers and response times of a large number of client devices, and a network topology structure, traffic distribution, an operating pattern, etc. corresponding to the large number of client devices. The constructed machine learning model can correctly infer the network topology structure, the traffic distribution (that is, traffic distribution information), the traffic allocation (that is, traffic allocation information), the operating pattern (that is, traffic pattern information), and other information of the client device according to the MAC address information, the IP address information, the priority information, the label, the VLAN number, and the response time of the client device. Thereafter, the computing device 130 determines the traffic configuration information 215 according to the inferred network topology structure, the traffic distribution (that is, traffic distribution information), the traffic allocation (that is, traffic allocation information), and the operating pattern (that is, traffic pattern information) of the client device.

In some examples of the disclosure, the one or more statistics data models or the one or more configuration data models are based on a customer premises equipment (CPE) wide area network (WAN) management protocol (CWMP). In other examples of the disclosure, the statistics data model or configuration data model may also be based on other similar communication protocols or network protocols, including existing protocols and protocols to be developed in the future.

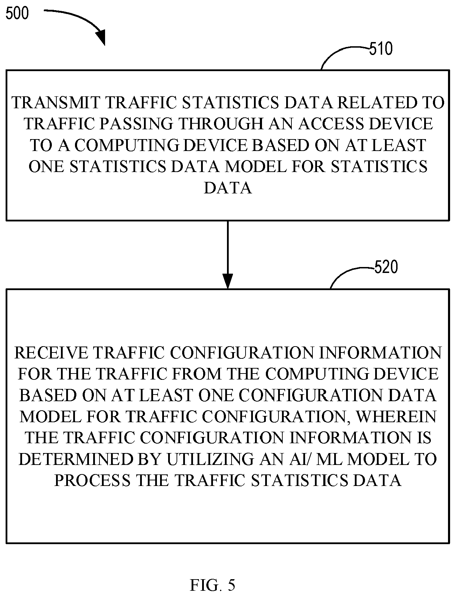

FIG. 5 is a schematic flowchart performed by an access device 120 according to some examples of the disclosure. For ease of description, a flow 500 of FIG. 5 is described with reference to FIG. 1A. In block 510, the access device 120 transmits traffic statistics data related to traffic passing through the access device 120 to a computing device 130 based on at least one statistics data model for statistics data. In block 520, the access device 120 receives traffic configuration information for the traffic from the computing device 130 based on at least one configuration data model for traffic configuration, wherein the traffic configuration information is determined by utilizing an artificial intelligence (AI)/machine learning (ML) model to process the traffic statistics data. In block 530, the access device 120 configures the traffic based on the traffic configuration information.

In some examples, in a traffic configuration process, the access device 120 controls at least one of quality of service (QoS), bandwidth allocation, or traffic scheduling of the traffic based on the traffic configuration information.

In some examples, the at least one statistics data model and the at least one configuration data model are applied to at least one of a media access control (MAC) layer, an Internet protocol (IP) layer, or a transport layer.

In some examples, the access device 120 transmits a request message to the computing device 130 to request that the computing device 130 to transmit the traffic configuration information to the access device.

In some examples, the access device 120 performs a part of computation associated with utilizing the AI/ML model to process the traffic statistics data, wherein the other part of the computation is performed by the computing device 130.

In some examples, the at least one statistics data model includes at least one of the following: a first statistics data model for MAC layer connection information; a second statistics data model for IP layer connection information; a third statistics data model of a statistics data list of MAC layer connection for the MAC layer connection information; or a fourth statistics data model of a statistics data list of IP layer connection for the MAC layer connection information.

In some examples, the at least one configuration data model includes at least one of the following: a first configuration data model for MAC layer control information; a second configuration data model for IP layer control information; a third configuration data model of an MAC layer control list for the MAC layer control information; or a fourth configuration data model of an IP layer control list for the MAC layer control information.

In some examples, the first statistics data model includes at least one of the following: a label associated with the MAC layer connection; a source MAC address associated with the MAC layer connection; a virtual local area network (VLAN) number associated with the MAC layer connection; a destination MAC address associated with the MAC layer connection; a priority associated with the MAC layer connection; a setup time associated with the MAC layer connection; a sustain time associated with the MAC layer connection; or a statistics timestamp associated with the MAC layer connection.

In some examples, the second statistics data model includes at least one of the following: a label associated with the IP layer connection; an IP version associated with the IP layer connection; a transport protocol associated with the IP layer connection; a source IP address associated with the IP layer connection; a source port number associated with the IP layer connection; a destination IP address associated with the IP layer connection; a destination port number associated with the IP layer connection; a setup time associated with the IP layer connection; a sustain time associated with the IP layer connection; or a statistics timestamp associated with the IP layer connection.

In some examples, the first configuration data model includes at least one of the following: a label associated with MAC layer connection; a VLAN number associated with the MAC layer connection; or a priority associated with the MAC layer connection.

In some examples, the second configuration data model includes at least one of the following: a label associated with IP layer connection; a VLAN number associated with the IP layer connection; a priority associated with the IP layer connection; or a differentiated service code point (DSCP) associated with the IP layer connection.

In some examples, at least one of the at least one statistics data model or the at least one configuration data model is based on a customer premises equipment (CPE) wide area network (WAN) management protocol (CWMP).

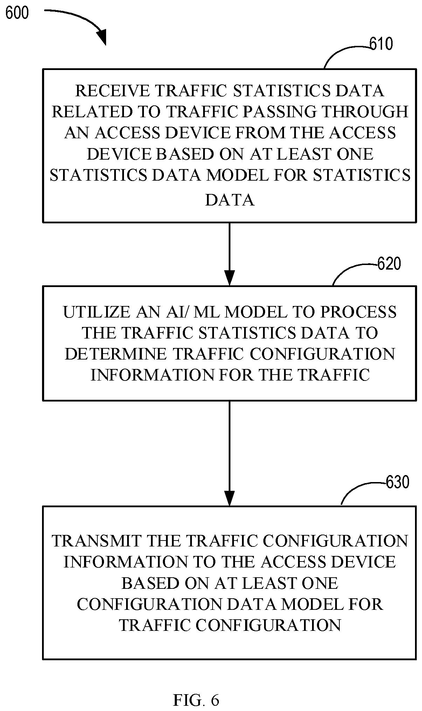

FIG. 6 is a schematic flowchart performed by a computing device 130 according to some examples of the disclosure. For ease of description, a flow 600 of FIG. 6 is described with reference to FIG. 1A. In block 610, the computing device 130 receives traffic statistics data related to traffic passing through an access device 120 from the access device 120 based on at least one statistics data model for statistics data. In block 620, the computing device 130 utilize an artificial intelligence (AI)/machine learning (ML) model to process the traffic statistics data to determine traffic configuration information for the traffic. In block 630, the computing device 130 transmits the traffic configuration information to the access device 120 based on at least one configuration data model for traffic configuration.

In some examples, in order to determine the traffic configuration information, the computing device 130 utilizes the AI/ML model to determine at least one of network topology information, traffic distribution information, traffic allocation information, and traffic pattern information based on the traffic statistics data; and utilizes the AI/ML model to determine the traffic configuration information based on the at least one of the network topology information, the traffic distribution information, the traffic allocation information, and the traffic pattern information.

In some examples, the at least one statistics data model and the at least one configuration data model are applied to at least one of a media access control (MAC) layer, an Internet protocol (IP) layer, or a transport layer.

In some examples, the computing device 130 receives a request message from the access device 120. The request message is for requesting the computing device 130 to transmit the traffic configuration information to the access device 120.

In some examples, the computing device 130 performs a part of computation associated with utilizing the AI/ML model to process the traffic statistics data. The other part of the computation is performed by the access device 120.

In some examples, the at least one statistics data model includes at least one of the following: a first statistics data model for MAC layer connection information; a second statistics data model for IP layer connection information; a third statistics data model of a statistics data list of MAC layer connection for the MAC layer connection information; or a fourth statistics data model of a statistics data list of IP layer connection for the MAC layer connection information.

In some examples, the at least one configuration data model includes at least one of the following: a first configuration data model for MAC layer control information; a second configuration data model for IP layer control information; a third configuration data model of an MAC layer control list for the MAC layer control information; or a fourth configuration data model of an IP layer control list for the MAC layer control information.

In some examples, the first statistics data model includes at least one of the following: a label associated with the MAC layer connection; a source MAC address associated with the MAC layer connection; a virtual local area network (VLAN) number associated with the MAC layer connection; a destination MAC address associated with the MAC layer connection; a priority associated with the MAC layer connection; a setup time associated with the MAC layer connection; a sustain time associated with the MAC layer connection; or a statistics timestamp associated with the MAC layer connection.

In some examples, the second statistics data model includes at least one of the following: a label associated with the IP layer connection; an IP version associated with the IP layer connection; a transport protocol associated with the IP layer connection; a source IP address associated with the IP layer connection; a source port number associated with the IP layer connection; a destination IP address associated with the IP layer connection; a destination port number associated with the IP layer connection; a setup time associated with the IP layer connection; a sustain time associated with the IP layer connection; or a statistics timestamp associated with the IP layer connection.

In some examples, the first configuration data model includes at least one of the following: a label associated with MAC layer connection; a VLAN number associated with the MAC layer connection; or a priority associated with the MAC layer connection.

In some examples, the second configuration data model includes at least one of the following: a label associated with IP layer connection; a VLAN number associated with the IP layer connection; a priority associated with the IP layer connection; or a differentiated service code point (DSCP) associated with the IP layer connection.

In some examples, the traffic configuration information is for controlling at least one of quality of service (QoS), bandwidth allocation, or traffic scheduling of the traffic.

In some examples, at least one of the at least one statistics data model or the at least one configuration data model is based on a customer premises equipment (CPE) wide area network (WAN) management protocol (CWMP).

In some illustrative examples, an apparatus (for example, the access device 120) capable of executing the method 500 may include means for executing various steps of the method 500, which may be implemented in any suitable form. For example, the means may be implemented in a circuit or software module.

The apparatus includes: means for transmitting traffic statistics data related to traffic passing through the access device to a computing device based on at least one statistics data model for statistics data at an access device; means for receiving traffic configuration information for the traffic from the computing device based on at least one configuration data model for traffic configuration, wherein the traffic configuration information is determined by utilizing an artificial intelligence (AI)/machine learning (ML) model to process the traffic statistics data; and means for configuring the traffic based on the traffic configuration information.

In some examples, the means for configuring the traffic includes: means for controlling at least one of quality of service (QoS), bandwidth allocation, or traffic scheduling of the traffic based on the traffic configuration information.

In some examples, the at least one statistics data model and the at least one configuration data model are applied to at least one of a media access control (MAC) layer, an Internet protocol (IP) layer, or a transport layer.

In some examples, the apparatus further includes: means for transmitting a request message to the computing device to request that the computing device to transmit the traffic configuration information to the access device.

In some examples, the apparatus further includes: means for performing a part of computation associated with utilizing the AI/MI, model to process the traffic statistics data. The other part of the computation is performed by the computing device.

In some examples, the at least one statistics data model includes at least one of the following: a first statistics data model for MAC layer connection information; a second statistics data model for IP layer connection information; a third statistics data model of a statistics data list of MAC layer connection for the MAC layer connection information; or a fourth statistics data model of a statistics data list of IP layer connection for the MAC layer connection information.

In some examples, the at least one configuration data model includes at least one of the following: a first configuration data model for MAC layer control information; a second configuration data model for IP layer control information; a third configuration data model of an MAC layer control list for the MAC layer control information; or a fourth configuration data model of an IP layer control list for the MAC layer control information.

In some examples, the first statistics data model includes at least one of the following: a label associated with the MAC layer connection; a source MAC address associated with the MAC layer connection; a virtual local area network (VLAN) number associated with the MAC layer connection; a destination MAC address associated with the MAC layer connection; a priority associated with the MAC layer connection; a setup time associated with the MAC layer connection; a sustain time associated with the MAC layer connection; or a statistics timestamp associated with the MAC layer connection.

In some examples, the second statistics data model includes at least one of the following: a label associated with the IP layer connection; an IP version associated with the IP layer connection; a transport protocol associated with the IP layer connection; a source IP address associated with the IP layer connection; a source port number associated with the IP layer connection; a destination IP address associated with the IP layer connection; a destination port number associated with the IP layer connection; a setup time associated with the IP layer connection; a sustain time associated with the IP layer connection; or a statistics timestamp associated with the IP layer connection.

In some examples, the first configuration data model includes at least one of the following: a label associated with MAC layer connection; a VLAN number associated with the MAC layer connection; or a priority associated with the MAC layer connection.

In some examples, the second configuration data model includes at least one of the following: a label associated with IP layer connection; a VLAN number associated with the IP layer connection; a priority associated with the IP layer connection; or a differentiated service code point (DSCP) associated with the IP layer connection.

In some examples, at least one of the at least one statistics data model or the at least one configuration data model is based on a customer premises equipment (CPE) wide area network (WAN) management protocol (CWMP).

In some illustrative examples, an apparatus (for example, the computing device 130) capable of executing the method 600 may include means for executing various steps of the method 600. The means may be implemented in any suitable form. For example, the means may be implemented in a circuit or software module.

The apparatus includes: means for receiving traffic statistics data related to traffic passing through an access device from the access device based on at least one statistics data model for statistics data at a computing device at a computing device; means for utilizing an artificial intelligence (AI)/machine learning (ML) model to process the traffic statistics data to determine traffic configuration information for the traffic; and means for transmitting the traffic configuration information to the access device based on at least one configuration data model for traffic configuration.

In some examples, the means for determining the traffic configuration information includes: means for utilizing the AI/ML model to determine at least one of network topology information, traffic distribution information, traffic allocation information, and traffic pattern information based on the traffic statistics data; and means for utilizing the AI/ML model to determine the traffic configuration information based on the at least one of the network topology information, the traffic distribution information, the traffic allocation information, and the traffic pattern information.

In some examples, the at least one statistics data model and the at least one configuration data model are applied to at least one of a media access control (MAC) layer, an Internet protocol (IP) layer, or a transport layer.

In some examples, the apparatus further includes means for receiving a request message from the access device. The request message is for requesting the computing device to transmit the traffic configuration information to the access device.

In some examples, the apparatus further includes means for performing a part of computation associated with utilizing the AI/ML model to process the traffic statistics data. The other part of the computation is performed by the access device.

In some examples, the at least one statistics data model includes at least one of the following: a first statistics data model for MAC layer connection information; a second statistics data model for IP layer connection information; a third statistics data model of a statistics data list of MAC layer connection for the MAC layer connection information; or a fourth statistics data model of a statistics data list of IP layer connection for the MAC layer connection information.

In some examples, the at least one configuration data model includes at least one of the following: a first configuration data model for MAC layer control information; a second configuration data model for IP layer control information; a third configuration data model of an MAC layer control list for the MAC layer control information; or a fourth configuration data model of an IP layer control list for the MAC layer control information.

In some examples, the first statistics data model includes at least one of the following: a label associated with the MAC layer connection; a source MAC address associated with the MAC layer connection; a virtual local area network (VLAN) number associated with the MAC layer connection; a destination MAC address associated with the MAC layer connection; a priority associated with the MAC layer connection; a setup time associated with the MAC layer connection; a sustain time associated with the MAC layer connection; or a statistics timestamp associated with the MAC layer connection.

In some examples, the second statistics data model includes at least one of the following: a label associated with the IP layer connection; an IP version associated with the IP layer connection; a transport protocol associated with the IP layer connection; a source IP address associated with the IP layer connection; a source port number associated with the IP layer connection; a destination IP address associated with the IP layer connection; a destination port number associated with the IP layer connection; a setup time associated with the IP layer connection; a sustain time associated with the IP layer connection; or a statistics timestamp associated with the IP layer connection.

In some examples, the first configuration data model includes at least one of the following: a label associated with MAC layer connection; a VLAN number associated with the MAC layer connection; or a priority associated with the MAC layer connection.

In some examples, the second configuration data model includes at least one of the following: a label associated with IP layer connection; a VLAN number associated with the IP layer connection; a priority associated with the IP layer connection; or a differentiated service code point (DSCP) associated with the IP layer connection.

In some examples, the traffic configuration information is for controlling at least one of quality of service (QoS), bandwidth allocation, or traffic scheduling of the traffic.

In some examples, at least one of the at least one statistics data model or the at least one configuration data model is based on a customer premises equipment (CPE) wide area network (WAN) management protocol (CWMP).

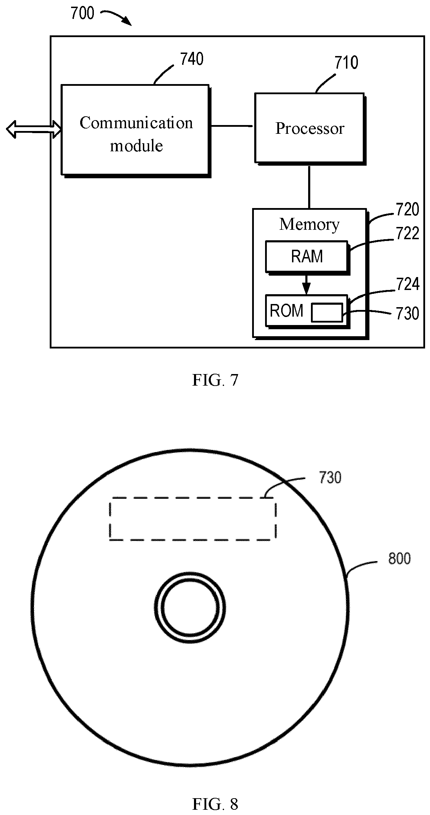

FIG. 7 is a simplified block diagram of an electronic device 700 suitable for implementing examples of the disclosure. The device 700 may be provided to implement an access device or a computing device, such as the access device 120 or the computing device 130 as shown in FIG. 1A. As shown in the figure, the device 700 includes one or more processors 710. One or more memories 720 are coupled to the processor 710, and one or more communication modules 740 are coupled to the processor 710.

The communication module 740 is for bidirectional communication. For example, the communication module 740 may include a transmitter, a receiver, or a transceiver suitable for the examples of the disclosure. A communication interface may represent any interface necessary for communication with other network elements.

The processor 710 may be of any type suitable for a local technology network and may include, but is not limited to, one or more of a general purpose computer, a special purpose computer, a microcontroller, a digital signal controller (DSP), and a controller-based multicore controller architecture. The device 700 may have a plurality of processors, such as application specific integrated circuit chips, slaved in time to a clock synchronized with a master processor.

The memory 720 may include one or more non-volatile memories and one or more volatile memories. Examples of the non-volatile memory include, but are not limited to, a read-only memory (ROM) 724, an erasable programmable read-only memory (EPROM), a flash memory, a hard disk, a compact disk (CD), a digital video disk (DVD), and other magnetic and/or optical storages. Examples of the volatile memory include, but are not limited to, a random access memory (RAM) 722, and other volatile memories that do not persist for a duration of a power outage.

A computer program 730 includes a computer-executable instruction that is executed by an association processor 710. The program 730 may be stored in the ROM 720. The processor 710 may perform any suitable actions and processes by loading the program 730 into the RAM 722.

The examples of the disclosure may be implemented by the program 730, such that the device 700 may perform any of the processes of the disclosure as discussed with reference to FIG. 2. The examples of the disclosure may also be implemented by hardware or by a combination of software and hardware.

In some examples, the program 730 may be tangibly included in a computer-readable medium. The computer-readable medium may be included in the device 700 (such as in the memory 720) or other storage devices accessible by the device 700. The program 730 may be loaded from the computer-readable medium into the RAM 722 for execution. The computer-readable medium may include any type of tangible non-volatile memories, such as an ROM, an EPROM, a flash memory, a hard disk, a CD, a DVD, etc.

FIG. 8 shows an example of the computer-readable medium 800 in a form of a CD or DVD. The computer-readable medium stores the program 730.

Generally, the various examples of the disclosure may be implemented in hardware or special purpose circuits, software, logic, or any combination thereof. Some aspects may be implemented in hardware, and other aspects may be implemented in firmware or software that may be executed by a controller, a microprocessor, or other computing devices. While various aspects of the examples of the disclosure are shown and described as block diagrams and flowcharts, or are represented by some other diagrams, it should be understood that the blocks, apparatus, systems, techniques, or methods described herein may be implemented as, for example, hardware, software, firmware, special purpose circuits or logic, general purpose hardware or controller or other computing devices, or some combinations thereof in a non-restrictive way.

The disclosure also provides at least one computer program product tangibly stored on a non-transitory computer-readable storage medium. The computer program product includes a computer-executable instruction, for example, an instruction included in a program module. The instruction is performed in a device on a target real or virtual processor to perform the methods 500, 600 described above with reference to FIGS. 5-6. Generally, the program module includes a routine, a program, a library, an object, a class, a component, a data structure, etc. that perform a particular task or implement a particular abstract data type. In various examples, functions of the program modules may be combined or divided between the program modules as desired. A machine-executable instruction for the program module may be performed locally or in a distributed device. In the distributed device, the program module can be located in local and remote storage media.

A computer program code for implementing the method in the disclosure may be written in one or more programming languages. The computer program codes may be provided for a processor of a general purpose computer, a special purpose computer, or other programmable data processing apparatuses, such that the program codes cause functions/operations specified in the flowchart and/or the block diagram to be implemented when executed by the computer or other programmable data processing apparatuses. The program code may be performed entirely on a computer, partly on a computer, as a stand-alone software package, partly on a computer and partly on a remote computer alternatively entirely on a remote computer or server.

In the context of the disclosure, the computer program code or related data may be carried by any suitable carrier for enabling a device, an apparatus or a processor to perform the various processes and operations described above. Examples of the carrier include a signal, a computer-readable medium, etc. Examples of the signal may include electrical, optical, radio, acoustic, or other forms of propagated signals, such as a carrier wave, an infrared signal, etc.

The computer-readable medium may be any tangible medium that contains or stores a program for or related to an instruction execution system, apparatus, or device. The computer-readable medium may be a computer-readable signal medium or a computer-readable storage medium. The computer-readable medium may include, but is not limited to, an electronic, magnetic, optical, electromagnetic, infrared, or semiconductor system, apparatus, or device, or any suitable combination of the foregoing. More detailed examples of the computer-readable storage medium include an electrical connection based on one or more wires, a portable computer diskette, a hard disk, a random-access memory (RAM), a read-only memory (ROM), an erasable programmable read-only memory (EPROM or flash memory), an optical storage device, a magnetic storage device, or any suitable combination of the foregoing. As used herein, the term "non-transient" refers to a qualification (that is, tangible, not signal) of the medium, rather than to persistence (for example, RAM and ROM) of data storage.

The access device, the computing device, the method, the apparatus, and the computer-readable medium provided in one or more examples of the disclosure provide an end-to-end global bandwidth allocation solution. Information such as a traffic topology structure in a wireless local area network is obtained by uploading an MAC layer sending address and receiving address, an IP layer sending address and receiving address of each client device from the perspective of an access point, and then performing inferring through a machine learning model. According to inferred information, bandwidth allocation and/or QoS control is performed for each client device. The access device, the computing device, the method, the apparatus, and the computer-readable medium provided in one or more examples of the disclosure use a CWMP/USP management protocol as a framework, extend the statistics data model/configuration data model for bandwidth allocation, QoS control, and traffic scheduling, are an architectural solution that uses artificial intelligence (AI)/machine learning (ML) as a part of future WiFi network traffic classification, bandwidth allocation, and QoS control. The access device, the computing device, the method, the apparatus, and the computer-readable medium provided in one or more examples of the disclosure implement a higher-level and more specific bandwidth allocation and scheduling strategy, and are applicable to application scenes other than air interfaces, and statistics on traffic allocation/distribution do not involve traffic content, so as to ensure user privacy.

Furthermore, although the operations of the method of the disclosure are described in a particular order in the drawings, this does not require or imply that the operations must be performed in the particular order or that all illustrated operations must be performed to achieve desired results. Conversely, steps depicted in the flowchart may be performed in a different order. Additionally or alternatively, some steps may be omitted, a plurality of steps may be combined into one step to be performed, and/or one step may be divided into a plurality of step to be performed. It should also be noted that features and functions of two or more apparatuses according to the disclosure may be embodied in one apparatus. Conversely, the features and functions of one apparatus described above may be further divided into being embodied by a plurality of apparatus.

While the disclosure has been described with reference to several specific examples, it should be understood that the disclosure is not limited to the specific examples disclosed. The disclosure is intended to cover various modifications and equivalent arrangements included within the spirit and scope of the appended claims.

## Claims

1. An access device (120), comprising:
at least one processor; and
at least one memory storing instructions that, when executed by the at least one processor, cause the access device at least to:
transmit (500), to a computing device, traffic statistics data related to traffic passing through the access device based on at least one statistics data model for statistics data;
receive (520), from the computing device, traffic configuration information for the traffic based on at least one configuration data model for traffic configuration, wherein the traffic configuration information is determined by utilizing an artificial intelligence (AI)/machine learning (ML) model to process the traffic statistics data; and
configure the traffic based on the traffic configuration information.

2. The access device (120) according to claim 1, wherein the access device is caused to configure the traffic by:
controlling at least one of quality of service, QoS, bandwidth allocation, or traffic scheduling based on the traffic configuration information.

3. The access device (120) according to claim 1 or 2, wherein a) the at least one statistics data model and the at least one configuration data model are applied to at least one of a media access control, MAC, layer, an Internet protocol, IP, layer, or a transport layer,
and/or wherein b) the access device is further caused to:
transmit a request message to the computing device to request that the computing device transmit the traffic configuration information to the access device,
and/or wherein c) the access device is further caused to:
perform a part of computation associated with utilizing the AI/ML model to process the traffic statistics data, wherein the other part of the computation is performed by the computing device,
and/or wherein d) the at least one statistics data model comprises at least one of the following:
a first statistics data model for MAC layer connection information;
a second statistics data model for IP layer connection information;
a third statistics data model of a statistics data list of MAC layer connection for the MAC layer connection information; or
a fourth statistics data model of a statistics data list of IP layer connection for the MAC layer connection information,
wherein for example d1) the first statistics data model comprises at least one of the following:
a label associated with the MAC layer connection;
a source MAC address associated with the MAC layer connection;
a virtual local area network, VLAN, number associated with the MAC layer connection;
a destination MAC address associated with the MAC layer connection;
a priority associated with the MAC layer connection;
a setup time associated with the MAC layer connection;
a sustain time associated with the MAC layer connection; or
a statistics timestamp associated with the MAC layer connection,
wherein for example d2) the second statistics data model comprises at least one of the following:
a label associated with the IP layer connection;
an IP version associated with the IP layer connection;
a transport protocol associated with the IP layer connection;
a source IP address associated with the IP layer connection;
a source port number associated with the IP layer connection;
a destination IP address associated with the IP layer connection;
a destination port number associated with the IP layer connection;
a setup time associated with the IP layer connection;
a sustain time associated with the IP layer connection; or
a statistics timestamp associated with the IP layer connection.

4. The access device (120) according to any one of claims 1-5, wherein the at least one configuration data model comprises at least one of the following:
a first configuration data model for MAC layer control information;
a second configuration data model for IP layer control information;
a third configuration data model of a MAC layer control list for the MAC layer control information; or
a fourth configuration data model of an IP layer control list for the MAC layer control information,
wherein for example the first configuration data model comprises at least one of the following:
a label associated with MAC layer connection;
a VLAN number associated with the MAC layer connection; or
a priority associated with the MAC layer connection,
wherein for example the second configuration data model comprises at least one of the following:
a label associated with the IP layer connection;
a VLAN number associated with the IP layer connection;
a priority associated with the IP layer connection; or
a differentiated service code point, DSCP, associated with the IP layer connection.

5. The access device (120) according to any one of claims 1-4, wherein at least one of the at least one statistics data model or the at least one configuration data model is based on a customer premises equipment, CPE, wide area network, WAN, management protocol, CWMP.

6. A computing device (130), comprising:
at least one processor; and
at least one memory storing instructions that, when executed by the at least one processor, cause the computing device at least to:
receive, from the access device, traffic statistics data related to traffic passing through an access device based on at least one statistics data model for statistics data;
utilize an artificial intelligence, AI,/machine learning, ML, model to process the traffic statistics data to determine traffic configuration information for the traffic; and
transmit the traffic configuration information to the access device based on at least one configuration data model for traffic configuration.

7. The computing device (130) according to claim 6, wherein the computing device is caused to determine the traffic configuration information by:
utilizing the AI/ML model to determine at least one of network topology information, traffic distribution information, traffic allocation information, and traffic pattern information based on the traffic statistics data; and
utilizing the AI/ML model to determine the traffic configuration information based on the at least one of the network topology information, the traffic distribution information, the traffic allocation information, and the traffic pattern information.

8. The computing device (130) according to claim 6 or 7, wherein a) the at least one statistics data model and the at least one configuration data model are applied to at least one of a media access control, MAC, layer, an Internet protocol, IP, layer, or a transport layer,
and/or wherein b) the computing device is further caused to:
receive a request message from the access device, wherein the request message is for requesting the computing device to transmit the traffic configuration information to the access device,
and/or wherein c) the computing device is further caused to:
perform a part of computation associated with utilizing the AI/ML model to process the traffic statistics data, wherein the other part of the computation is performed by the access device,
and/or wherein d) the at least one statistics data model comprises at least one of the following:
a first statistics data model for MAC layer connection information;
a second statistics data model for IP layer connection information;
a third statistics data model of a statistics data list of MAC layer connection for the MAC layer connection information; or
a fourth statistics data model of a statistics data list of IP layer connection for the MAC layer connection information,
wherein for example d1) the first statistics data model comprises at least one of the following:
a label associated with the MAC layer connection;
a source MAC address associated with the MAC layer connection;
a virtual local area network, VLAN, number associated with the MAC layer connection;
a destination MAC address associated with the MAC layer connection;
a priority associated with the MAC layer connection;
a setup time associated with the MAC layer connection;
a sustain time associated with the MAC layer connection; or
a statistics timestamp associated with the MAC layer connection,
wherein for example d2) the second statistics data model comprises at least one of the following:
a label associated with the IP layer connection;
an IP version associated with the IP layer connection;
a transport protocol associated with the IP layer connection;
a source IP address associated with the IP layer connection;
a source port number associated with the IP layer connection;
a destination IP address associated with the IP layer connection;
a destination port number associated with the IP layer connection;
a setup time associated with the IP layer connection;
a sustain time associated with the IP layer connection; or
a statistics timestamp associated with the IP layer connection.

9. The computing device (130) according to any one of claims 6-8, wherein the at least one configuration data model comprises at least one of the following:
a first configuration data model for MAC layer control information;
a second configuration data model for IP layer control information;
a third configuration data model of a MAC layer control list for the MAC layer control information; or
a fourth configuration data model of an IP layer control list for the MAC layer control information,
wherein for example the first configuration data model comprises at least one of the following:
a label associated with MAC layer connection;
a VLAN number associated with the MAC layer connection; or
a priority associated with the MAC layer connection,
wherein for example the second configuration data model comprises at least one of the following:
a label associated with IP layer connection;
a VLAN number associated with the IP layer connection;
a priority associated with the IP layer connection; or
a differentiated service code point, DSCP, associated with the IP layer connection.

10. The computing device (130) according to any one of claims 6-9, wherein a) the traffic configuration information is for controlling at least one of quality of service, QoS, bandwidth allocation, or traffic scheduling of the traffic, and/or b) at least one of the at least one statistics data model or the at least one configuration data model is based on a customer premises equipment, CPE, wide area network, WAN, management protocol, CWMP.

11. A method, comprising:
transmitting (510), at an access device, traffic statistics data related to traffic passing through the access device to a computing device based on at least one statistics data model for statistics data;
receiving (520) traffic configuration information for the traffic from the computing device based on at least one configuration data model for traffic configuration, wherein the traffic configuration information is determined by utilizing an artificial intelligence, AI,/machine learning, ML, model to process the traffic statistics data; and
configuring the traffic based on the traffic configuration information.

12. A method, comprising:
receiving (610), at a computing device, traffic statistics data related to traffic passing through an access device from the access device based on at least one statistics data model for statistics data;
utilizing (620) an artificial intelligence, AI,/machine learning, ML, model to process the traffic statistics data to determine traffic configuration information for the traffic; and
transmitting (630) the traffic configuration information to the access device based on at least one configuration data model for traffic configuration.

13. An apparatus, comprising:
means for transmitting (510), at an access device, traffic statistics data related to traffic passing through the access device to a computing device based on at least one statistics data model for statistics data;
means for receiving (520), from the computing device, traffic configuration information for the traffic based on at least one configuration data model for traffic configuration, wherein the traffic configuration information is determined by utilizing an artificial intelligence, AI,/machine learning, ML, model to process the traffic statistics data; and
means for configuring the traffic based on the traffic configuration information.

14. An apparatus, comprising:
means for receiving (610), at a computing device, traffic statistics data related to traffic passing through an access device from the access device based on at least one statistics data model for statistics data;
means for utilizing (620) an artificial intelligence, AI,/machine learning, ML, model to process the traffic statistics data to determine traffic configuration information for the traffic; and
means for transmitting (630) the traffic configuration information to the access device based on at least one configuration data model for traffic configuration.

15. A computer-readable medium (800), having stored thereon instructions that, when executed by at least one processing unit, cause the at least one processing unit to be configured to perform the method according to claim 11 or 12.
